# EUROPEAN PATENT APPLICATION

(11) **EP 4 451 448 A1**
(43) Date of publication of application: **23.10.2024**
(21) Application number: 22956078.4
(22) Date of filing: 25.08.2022
(51) Int. Cl.: H01M 50/342

(54) **END COVER ASSEMBLY, BATTERY CELL, BATTERY AND ELECTRIC APPARATUS**

(71) Applicant: Contemporary Amperex Technology (Hong Kong) Limited, Central, Central And Western District (HK)
(72) Inventor: CHEN, Long, Ningde City, Fujian 352100 (CN); LIN, Denghua, Ningde City, Fujian 352100 (CN); ZHENG, Yulian, Ningde City, Fujian 352100 (CN); WANG, Peng, Ningde City, Fujian 352100 (CN); JIN, Haizu, Ningde City, Fujian 352100 (CN)
(74) Representative: Ran, Handong
(86) International application number: PCT/CN2022/114899
(87) International publication number: WO 2024/040532

(57) **Abstract**

The present application relates to the field of batteries, and provides an end cover assembly, a battery cell, a battery and an electric apparatus. The end cover assembly comprises an end cover and a pressure relief mechanism, wherein the end cover is provided with a pressure relief hole; the pressure relief mechanism covers the pressure relief hole; the pressure relief mechanism is made of a high polymer material; and the pressure relief mechanism is provided with a weak portion, which is configured to crack when the pressure of a battery cell is relieved. The pressure relief mechanism is made of the high polymer material, such that not only can a gas in the battery cell be stably discharged when the pressure of the battery cell is relieved, but external moisture can also be blocked from seeping into the battery cell when the battery cell is normally used, thereby reducing the risk of short-circuiting of the battery cell. By means of arranging the weak portion on the pressure relief mechanism, the weak portion can crack when the pressure of the battery cell is relieved, so as to form an opening through which the gas can smoothly pass, such that the pressure relief mechanism is not prone to experiencing unsmooth pressure relief caused by the problems of deformation, cracking, partial opening, etc., thereby being conducive to an improvement in the safety of the battery cell.

## Description

### Technical Field

The present application relates to the field of batteries, and in particular, to an end cap assembly, a battery cell, a battery and a power consuming device.

### Background Art

Batteries are widely used in the field of new energy, such as electric vehicles and new energy vehicles. New energy vehicles and electric vehicles have become a new trend in development of the automotive industry. Design factors on many aspects need to be simultaneously considered for the development of the battery technology, such as service life, energy density, discharge capacity, charge-discharge rate, and other performance parameters of the battery. In addition, the safety of the battery needs to be taken into account. However, the current batteries are less safe.

### Summary of the Invention

An objective of embodiments of the present application is to provide an end cap assembly, a battery cell, a battery and a power consuming device, which are intended to solve the problem of the poor safety of batteries in the related art.

In a first aspect, embodiments of the present application provide an end cap assembly for a battery cell. The end cap assembly comprises an end cap and a pressure relief mechanism. The end cap is provided with a pressure relief hole, and the pressure relief mechanism covers the pressure relief hole. The pressure relief mechanism is made of a polymer material, and the pressure relief mechanism is provided with a weakened portion configured to crack when pressure is relieved from the battery cell.

In the above technical solution, since the polymer material has breathable and waterproof properties and the pressure relief mechanism is made of a polymer material, not only can gas be steadily discharged from the battery cell when pressure is relieved from the battery cell, but external moisture can also be blocked from penetrating into the battery cell when the battery cell is in normal use, to block the flow of water vapor and an electrolyte to the inside and outside of the battery cell through the pressure relief mechanism, reducing the risk of short circuit of the battery cell. In addition, by providing the pressure relief mechanism with a weakened portion, the weakened portion can crack when pressure is relieved from the battery cell, forming an opening for the smooth passage of the gas. The pressure relief mechanism is less prone to problems such as deformation, cracking and local opening that lead to non-smooth pressure relief, facilitating the improvement of the safety of the battery cell.

As an optional technical solution of the embodiments of the present application, the weakened portion is formed by providing an indented groove on the pressure relief mechanism.

In the above technical solution, providing the indented groove on the pressure relief mechanism to form the weakened portion is simple and convenient, so that the machining is easy, and the production cost is low.

As an optional technical solution of the embodiments of the present application, the pressure relief mechanism is provided with a pressure relief portion, the indented groove extends along an edge of the pressure relief portion, and the pressure relief portion is configured to be opened with the indented groove as a boundary when pressure is relieved from the battery cell.

In the above technical solution, since an indentation is provided along the edge of the pressure relief portion, when pressure is relieved from the battery cell, the pressure relief portion will be opened along the edge to provide a larger opening for the passage of the gas.

As an optional technical solution of the embodiments of the present application, the indented groove is a non-closed structure extending along a non-closed trajectory.

In the above technical solution, there is a distance between two ends of the non-closed trajectory, that is, there is a distance between two ends of the indented groove extending along the non-closed trajectory. In this way, when pressure is relieved from the battery cell, the part of the indented groove between the two ends can serve as a rotation axis, around which the pressure relief portion is flipped and opened, facilitating the improvement of the opening efficiency of the pressure relief portion, so that the pressure relief portion is less prone to problems such as deformation, cracking and local opening that lead to non-smooth pressure relief, facilitating the improvement of the safety of the battery cell.

As an optional technical solution of the embodiments of the present application, the indented groove comprises a first section, a second section and a third section connected to one another in sequence, the first section being arranged opposite the third section.

In the above technical solution, when pressure is relieved from the battery cell, the pressure relief portion is opened with the first section, the second section and the third section as boundaries, and a connection line between the end of the first section away from the second section and the end of the third section away from the second section serves as a rotation axis for the pressure relief portion to rotate, facilitating the opening of the pressure relief portion.

As an optional technical solution of the embodiments of the present application, the second section is in the shape of a straight line, and the first section and the third section are symmetrical with respect to a perpendicular bisector of the second section.

In the above technical solution, the first section and the third section are arranged symmetrically with respect to the perpendicular bisector of the second section, so that the pressure relief portion is stressed uniformly when being opened, facilitating the improvement of the opening efficiency of the pressure relief portion.

As an optional technical solution of the embodiments of the present application, the first section and the third section are arc-shaped.

In the above technical solution, configuring the first section and the third section to be arc-shaped facilitates the encircling of a larger range, so that the area of the pressure relief portion is larger. In this way, a larger opening for the passage of gas is formed after the pressure relief portion is opened, facilitating the smooth pressure relief.

As an optional technical solution of the embodiments of the present application, a hole wall surface of the pressure relief hole comprises a first flat surface, a second flat surface, a first arc-shaped surface and a second arc-shaped surface, wherein the first flat surface, the first arc-shaped surface, the second flat surface and the second arc-shaped surface are connected end-to-end in sequence; and the first arc-shaped surface is arranged coaxially with the first section, and the second arc-shaped surface is arranged coaxially with the third section.

In the above technical solution, the shape of the pressure relief mechanism matches that of the pressure relief hole, so as to reduce the material consumption of the pressure relief mechanism while providing a good covering effect on the pressure relief hole.

As an optional technical solution of the embodiments of the present application, the pressure relief mechanism is provided with two indented grooves, which are arranged back-to-back.

In the above technical solution, by providing two indented grooves on the pressure relief mechanism, two pressure relief portions are formed correspondingly. When pressure is relieved from the battery cell, the two pressure relief portions respectively crack from the positions where the two indented grooves are located, forming two openings for pressure relief. The pressure relief mechanism is less prone to problems such as deformation, cracking and local opening that lead to non-smooth pressure relief, providing a good pressure relief effect, and facilitating the improvement of the safety of the battery cell.

As an optional technical solution of the embodiments of the present application, the two indented grooves partially overlap each other.

In the above technical solution, when the overlapping portion of the two indented grooves cracks, the two openings can be formed at the same time, facilitating the improvement of the opening efficiency of the pressure relief mechanism.

As an optional technical solution of the embodiments of the present application, the area of the pressure relief portion is S1, and the area of the pressure relief hole is S2, satisfying: 0.3 < S1/S2 ≤ 1.

In the above technical solution, the ratio of the area of the pressure relief portion to the area of the pressure relief hole is greater than 0.3 and less than or equal to 1, to ensure that the pressure relief portion has a larger area, so that after the pressure relief portion is opened, a larger opening is formed for the passage of the gas, thereby allowing the pressure to be relieved smoothly from the battery cell.

As an optional technical solution of the embodiments of the present application, the indented groove comprises a first section, a second section and a third section connected to one another in sequence, wherein the first section is arranged opposite the third section, the first section and the third section are in the shape of a semicircle, the second section is in the shape of a straight line, and the first section and the third section are symmetrical with respect to a perpendicular bisector of the second section; and
the length of the second section is L, and the radii of the first section and the third section are both r, satisfying: S1 = πr² + 2rL.

In the above technical solution, configuring the first section and the third section in the shape of a semicircle facilitates the encircling of a larger range, so that the area of the pressure relief portion is larger. In this way, a larger opening for the passage of gas is formed after the pressure relief portion is opened, facilitating the smooth pressure relief. The first section and the third section are arranged symmetrically with respect to the perpendicular bisector of the second section, so that the pressure relief portion is stressed uniformly when being opened, facilitating the improvement of the opening efficiency of the pressure relief portion. In this case, the pressure relief portion comprises a region jointly defined by the first section, the second section, the third section, and a connection line between the end of the first section away from the second section and the end of the third section away from the second section. The area of the pressure relief portion is: S1 = πr² + 2rL.

As an optional technical solution of the embodiments of the present application, the indented groove is a closed structure extending along a closed trajectory.

In the above technical solution, the indented groove is configured as a closed structure extending along a closed trajectory, so that when the pressure relief mechanism cracks along the indented groove during the pressure relief, to form an opening for the passage of the gas.

As an optional technical solution of the embodiments of the present application, the indented groove comprises a first section, a second section, a third section and a fourth section connected end-to-end in sequence, wherein the first section is arranged opposite the third section, the second section is arranged opposite the fourth section, the first section and the third section are arc-shaped, and the second section and the fourth section are in the shape of a straight line.

In the above technical solution, the first section and the third section are arc-shaped grooves, and the pressure relief mechanism has a weakened part formed in each of the middle of the first section and the middle of the third section, and the weakened parts are the parts of the pressure relief portion that are opened earliest, so that the pressure relief portion can be opened in a timely manner when the inside of the battery cell reaches the detonation pressure. The second section and the fourth section are linear grooves extending in a length direction of the end cap, so that the second section and the fourth section are arranged in parallel. After cracking along the first section and the third section, the pressure relief portion can be more easily opened along the second section and the fourth section, increasing the opening rate of the pressure relief portion and achieving rapid pressure relief.

As an optional technical solution of the embodiments of the present application, the width of the indented groove is W, and the thickness of the pressure relief mechanism is T, satisfying: 0 < W/T ≤ 1.

In the above technical solution, the ratio of the width of the indented groove to the thickness of the pressure relief mechanism is greater than 0 and less than or equal to 1. The width of the indented groove should not be too wide, otherwise when pressure is relieved from the battery cell, the position where the indented groove is located will not be susceptible to shear force, but will be prone to tensile strain, making it difficult for the pressure relief mechanism to crack from the position of the indented groove. Where W/T > 1, compared with the case of 0 < W/T ≤ 1, it is more difficult for the pressure relief mechanism to crack from the position of the indented groove.

As an optional technical solution of the embodiments of the present application, W and T further satisfy: 0.004 mm ≤ W ≤ 0.018 mm; and/or 0.01 mm ≤ T ≤ 10 mm.

In the above technical solution, the width of the indented groove is in the range of 0.004-0.018 mm, and the pressure relief mechanism is likely to crack along the indented groove when pressure is relieved from the battery cell. The thickness of the pressure relief mechanism is within 0.01-10 mm, so that not only can gas be steadily discharged from the battery cell when pressure is relieved from the battery cell, but external moisture can also be blocked from penetrating into the battery cell when the battery cell is in normal use, reducing the risk of short circuit of the battery cell.

As an optional technical solution of the embodiments of the present application, the depth of the indented groove is H in mm, a detonation pressure of the battery cell is P in MPa, and the thickness of the pressure relief mechanism is T in mm, satisfying: H = K(-0.181P + T - 0.246), K ∈ [0.1, 5].

In the above technical solution, if the detonation pressure of the battery cell and the thickness of the pressure relief mechanism are known, the depth range that the indented groove should be indented can be obtained according to the equation.

As an optional technical solution of the embodiments of the present application, the polymer material comprises at least one of fluorinated ethylene propylene copolymer and polychlorotrifluoroethylene.

In the above technical solution, fluorinated ethylene propylene copolymer and polychlorotrifluoroethylene have a good balance of breathability and waterproofness, and the pressure relief mechanism is made of at least one of fluorinated ethylene propylene copolymer and polychlorotrifluoroethylene, so that not only can gas be steadily discharged from the battery cell when pressure is relieved from the battery cell, but external moisture can also be blocked from penetrating into the battery cell when the battery cell is in normal use, reducing the risk of short circuit of the battery cell.

In a second aspect, the embodiments of the present application further provide a battery cell, comprising an electrode assembly, a housing and an end cap assembly as described above, wherein the housing has a receiving space which has an opening at at least one end, the receiving space is configured to receive the electrode assembly, and the end cap closes the opening.

In a third aspect, the embodiments of the present application further provide a battery, comprising a case and a battery cell as described above, wherein the battery cell is received in the case.

In a fourth aspect, the embodiments of the present application further provide a power consuming device, comprising a battery as described above, wherein the battery is configured to supply electric energy to the power consuming device.

### Brief Description of the Drawings

In order to more clearly describe the technical solutions of embodiments of the present application, the accompanying drawings required in the embodiments will be described briefly below. It should be understood that the following accompanying drawings illustrate only some embodiments of the present application and therefore should not be construed as a limitation on the scope thereof. For those of ordinary skill in the art, other relevant accompanying drawings can also be obtained from these accompanying drawings without any inventive effort.
FIG. 1 is a schematic structural diagram of a vehicle according to some embodiments of the present application;
FIG. 2 is an exploded view of a battery according to some embodiments of the present application;
FIG. 3 is an exploded view of a battery cell according to some embodiments of the present application;
FIG. 4 is an exploded view of an end cap assembly according to some embodiments of the present application;
FIG. 5 is an exploded view of an end cap assembly according to some other embodiments of the present application;
FIG. 6 is a schematic top view of an end cap assembly (with an indented groove being C-shaped) according to some embodiments of the present application;
FIG. 7 is a schematic top view of an end cap assembly (with an indented groove being double C-shaped, and an opening of each C shape being directed in a width direction of an end cap) according to some embodiments of the present application;
FIG. 8 is a schematic top view of an end cap assembly (with an indented groove being double C-shaped, and an opening of each C shape being directed in a length direction of an end cap) according to some embodiments of the present application;
FIG. 9 is a schematic top view of an end cap assembly (with an indented groove being in the shape of the Chinese character " 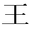 ") according to some embodiments of the present application;
FIG. 10 is a schematic top view of an end cap assembly (with an indented groove being O-shaped) according to some embodiments of the present application;
FIG. 11 is a schematic top view of an end cap assembly (with an indented groove being in the shape of a combination of O and C) according to some embodiments of the present application;
FIG. 12 is a cross-sectional view taken along line A-A of FIG. 6;
FIG. 13 is an enlarged view of part B in FIG. 9 (with the indented groove having a rectangular cross-section);
FIG. 14 is an enlarged view of part B in FIG. 9 (with the indented groove having a trapezoidal cross-section); and
FIG. 15 is an enlarged view of part B in FIG. 9 (with the indented groove having a triangular cross-section).

List of reference signs: 10 - case; 11 - first portion; 12 - second portion; 20 - battery cell; 21 - end cap assembly; 211 - end cap; 2111 - pressure relief hole; 2112 - first flat surface; 2113 - second flat surface; 2114 - first arc-shaped surface; 2115 - second arc-shaped surface; 2116 - groove; 212 - pressure relief mechanism; 2121 - indented groove; 21211 - first section; 21212 - second section; 21213 - third section; 21214 - fourth section; 2122 - pressure relief portion; 2123 - protrusion; 2124 - weakened portion; 213 - connecting member; 2131 - snap groove; 214 - sealing member; 22 - electrode assembly; 23 - housing; 100 - battery; 200 - controller; 300 - motor; 1000 - vehicle.

### Detailed Description of Embodiments

In order to make the objectives, technical solutions and advantages of embodiments of the present application clearer, the technical solutions in the embodiments of the present application will be described clearly below with reference to the accompanying drawings in the embodiments of the present application. Obviously, the embodiments described are some of, rather than all of, the embodiments of the present application. All other embodiments obtained by those of ordinary skill in the art based on the embodiments of the present application without involving any inventive effort shall fall within the scope of protection of the present application.

Unless otherwise defined, all technical and scientific terms used in the present application have the same meanings as those commonly understood by those skilled in the art to which the present application belongs. The terms used in the description of the present application are merely for the purpose of describing specific embodiments, but are not intended to limit the present application. The terms "comprising" and "having" and any variations thereof in the description and the claims of the present application as well as the brief description of the accompanying drawings described above are intended to cover non-exclusive inclusion. The terms "first", "second", etc. in the description and the claims of the present application as well as the foregoing accompanying drawings are used to distinguish between different objects, rather than describing a specific order or a primary-secondary relationship.

In the present application, the phrase "embodiment" mentioned means that the specific features, structures and characteristics described in conjunction with the embodiments may be included in at least one embodiment of the present application. The phrase at various locations in the description does not necessarily refer to the same embodiment, or an independent or alternative embodiment exclusive of another embodiment.

In the description of the present application, it should be noted that, the terms "mount", "connected", "connect", or "attach" should be interpreted in a broad sense unless explicitly defined and limited otherwise. For example, they may be a fixed connection, a detachable connection, or an integral connection; or may be a direct connection, an indirect connection by means of an intermediate medium, or internal communication between two elements. For those of ordinary skill in the art, the specific meanings of the foregoing terms in the present application may be understood according to specific circumstances.

The term "and/or" in the present application is merely a description of the associated relationship of associated objects, representing that three relationships may exist, for example, A and/or B, may be expressed as: only A exists, both A and B exist, and only B exists. In addition, the character "/" in the present application generally indicates that the associated objects before and after the character are in a relationship of "or".

In the embodiments of the present application, the same reference numerals denote the same components, and for the sake of brevity, the detailed description of the same components is omitted in different embodiments. It should be understood that the dimensions, such as thickness, length and width, of the various components in the embodiments of the present application illustrated in the accompanying drawings, as well as the dimensions, such as an overall thickness, length and width, of an integrated apparatus are merely illustrative and should not be construed to limit the present application in any way.

The phrase "multiple" appearing in the present application means two or more (including two).

In the present application, the battery cell may include a lithium-ion secondary battery cell, a lithium-ion primary battery cell, a lithium-sulfur battery cell, a sodium-lithium-ion battery cell, a sodium-ion battery cell, a magnesium-ion battery cell, etc., which will not be limited in the embodiments of the present application. The battery cell may be cylindrical, flat, cuboid or in another shape, which will also not be limited in the embodiments of the present application. The battery cells are generally classified into three types depending on the way of package: cylindrical battery cells, prismatic battery cells and pouch battery cells, which will also not be limited in the embodiments of the present application.

A battery mentioned in embodiments of the present application refers to a single physical module comprising one or more battery cells to provide a higher voltage and capacity. For example, the battery mentioned in the present application may include a battery module, a battery pack, etc. The battery generally comprises a case for packaging one or more battery cells. The case can prevent liquid or other foreign matter from affecting charging or discharging of the battery cell(s).

The battery cell comprises an electrode assembly and an electrolyte. The electrode assembly is composed of a positive electrode plate, a negative electrode plate, and a separator. The operation of the battery cell mainly relies on the movement of metal ions between the positive electrode plate and the negative electrode plate. The positive electrode plate comprises a positive current collector and a positive active material layer. A surface of the positive current collector is coated with the positive active material layer, the positive current collector not coated with the positive active material layer protrudes from the positive current collector coated with the positive active material layer, and the positive current collector not coated with the positive active material layer serves as a positive tab. Taking a lithium-ion battery as an example, the positive current collector may be made of aluminum, and the positive active material may be lithium cobalt oxide, lithium iron phosphate, ternary lithium, lithium manganate, etc. The negative electrode plate comprises a negative current collector and a negative active material layer. A surface of the negative current collector is coated with the negative active material layer, the negative current collector not coated with the negative active material layer protrudes from the negative current collector coated with the negative active material layer, and the negative current collector not coated with the negative active material layer serves as a negative tab. The negative current collector may be made of copper, and the negative active material may be carbon, silicon, etc. In order to ensure that no fusing occurs when a large current passes, multiple positive tabs are provided and are stacked together, and multiple negative tabs are provided and are stacked together. The separator may be made of polypropylene (PP) or polyethylene (PE), etc. In addition, the electrode assembly may be of a wound structure or a stacked structure, which will not be limited in the embodiments of the present application.

At present, from the perspective of the development of the market situation, batteries are used more and more widely. The batteries are not only used in energy storage power systems such as hydroelectric power plants, thermal power plants, wind power plants and solar power plants, but also widely used in electric transportation means such as electric bicycles, electric motorcycles and electric vehicles and in many fields such as military equipment and aerospace. With the continuous expansion of the application field of batteries, the market demand for the batteries is also expanding.

Design factors on many aspects need to be simultaneously considered for the development of the battery technology, such as service life, energy density, discharge capacity, charge-discharge rate, and other performance parameters of the battery. In addition, the safety of the battery needs to be taken into account. However, the current batteries are less safe.

For the battery cell, in order to ensure the safety of the battery cell, a pressure relief mechanism may be provided on an end cap of the battery cell. When the pressure inside the battery cell reaches a detonation pressure, the pressure relief mechanism is opened to relieve the pressure from the inside of the battery cell, to reduce the risk of explosion or fire of the battery cell.

The inventors have noticed that due to the influence of the production process, external moisture may enter the inside of the battery cell through the pressure relief mechanism, causing a short circuit of the battery cell. Water vapor or an electrolyte in the battery cell may also leak through the pressure relief mechanism, causing safety risks.

The inventors have further studied and found that the pressure relief mechanism may be made of a polymer material, and the breathable and waterproof properties of the polymer material can be used to block the flow of water vapor and the electrolyte to the inside and outside of the battery cell through the pressure relief mechanism. However, the pressure relief mechanism made of a polymer material has poor bursting consistency when pressure is relieved from the battery cell, which means that it is difficult to control the bursting pressure of each battery cell with the same specification within a rational fluctuation range, and when the pressure relief mechanism made of a polymer material is opened, it often happens that the pressure relief mechanism is deformed but cannot be opened in a timely manner for pressure relief. In addition, during a gas production process of the battery cell, the pressure relief mechanism made of a polymer material is likely to be affected by the internal gas pressure of the battery cell and causes small cracks. The gas can be partially released through the small cracks, so that it is difficult for the pressure relief mechanism to reach a bursting pressure, but the speed of pressure relief from the small cracks is slow, the internal pressure of the battery cell cannot be released in a timely manner, and thus there is a safety risk. In short, the pressure relief mechanism made of a polymer material is prone to bulging (the pressure relief mechanism is deformed to form a bulge) or cracking (small cracks are formed in the pressure relief mechanism) when pressure is relieved from the battery cell, resulting in non-smooth pressure relief, poor bursting consistency, and very unstable safety of the battery cell.

In view of this, the embodiments of the present application provide an end cap assembly. A pressure relief mechanism of the end cap assembly is made of a polymer material, and the pressure relief mechanism is provided with a weakened portion configured to crack when pressure is relieved from the battery cell.

Since the polymer material has breathable and waterproof properties and the pressure relief mechanism is made of a polymer material, not only can gas be steadily discharged from the battery cell when pressure is relieved from the battery cell, but external moisture can also be blocked from penetrating into the battery cell when the battery cell is in normal use, to block the flow of water vapor and an electrolyte to the inside and outside of the battery cell through the pressure relief mechanism, reducing the risk of short circuit of the battery cell.

In addition, by providing the pressure relief mechanism with a weakened portion, the weakened portion can crack when pressure is relieved from the battery cell, forming an opening for the smooth passage of the gas. The pressure relief mechanism is less prone to problems such as deformation, cracking and local opening that lead to non-smooth pressure relief, facilitating the improvement of the safety of the battery cell.

The technical solutions described in the embodiments of the present application are applicable to a battery and a power consuming device using the battery.

The power consuming device may be a vehicle, a mobile phone, a portable device, a notebook computer, a ship, a spacecraft, an electric toy, an electric tool, etc. The spacecraft includes an airplane, a rocket, an aerospace plane, a spaceship, etc. The electric toy includes a stationary or mobile electric toy, such as a game machine, an electric toy car, an electric toy ship, and an electric toy airplane. The electric tool includes a metal cutting electric tool, a grinding electric tool, an assembly electric tool, and a railway electric tool, such as an electric drill, an electric grinder, an electric wrench, an electric screwdriver, an electric hammer, an electric impact drill, a concrete vibrator, and an electric planer. The power consuming devices described above are not specially limited in the embodiments of the present application.

For ease of description, an example in which the power consuming device is a vehicle 1000 is taken for description in the following embodiments.

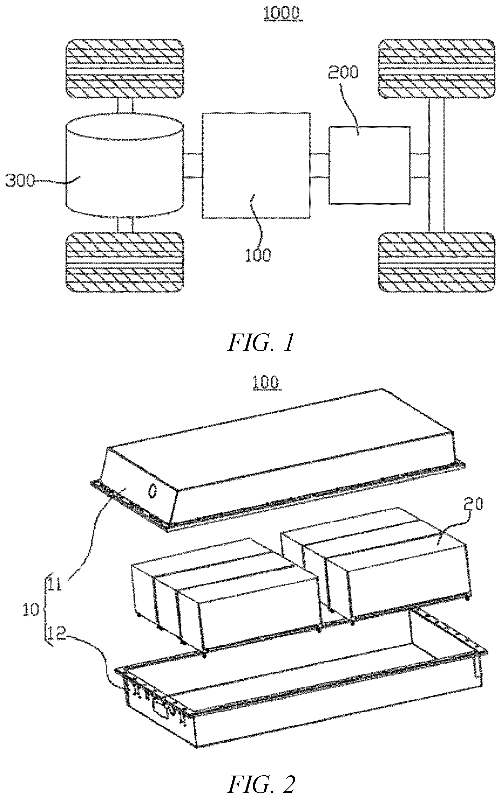

Referring to FIG. 1, FIG. 1 is a schematic structural diagram of a vehicle 1000 according to some embodiments of the present application. The vehicle 1000 may be a fuel vehicle, a gas vehicle, or a new energy vehicle. The new energy vehicle may be a battery electric vehicle, a hybrid electric vehicle, an extended-range vehicle, etc. A battery 100 is provided inside the vehicle 1000, and the battery 100 may be provided at the bottom, the front or the back of the vehicle 1000. The battery 100 may be configured to supply power to the vehicle 1000. For example, the battery 100 may be used as a power supply for operating the vehicle 1000. The vehicle 1000 may further comprise a controller 200 and a motor 300. The controller 200 is configured to control the battery 100 to supply power to the motor 300, for example, to meet working power requirements during starting, navigation and traveling of the vehicle 1000.

In some embodiments of the present application, the battery 100 can not only serve as a power supply for operating the vehicle 1000, but also serve as a power supply for driving the vehicle 1000, instead of or partially instead of fuel or natural gas, to provide driving power for the vehicle 1000.

Referring to FIG. 2, FIG. 2 is an exploded view of a battery 100 according to some embodiments of the present application. The battery 100 comprises a case 10 and a battery cell 20. The battery cell 20 is received in the case 10. The case 10 is configured to provide a receiving space for the battery cell 20, and the case 10 may have various structures. In some embodiments, the case 10 may comprise a first portion 11 and a second portion 12. The first portion 11 and the second portion 12 are fitted to each other in a covering manner, and the first portion 11 and the second portion 12 jointly define the receiving space for receiving the battery cell 20. The second portion 12 may be of a hollow structure with one end open, the first portion 11 may be of a plate-like structure, and the first portion 11 covers an open side of the second portion 12 such that the first portion 11 and the second portion 12 jointly define the receiving space. The first portion 11 and the second portion 12 may also each be of a hollow structure with one side open, and the open side of the first portion 11 covers the open side of the second portion 12. Of course, the case 10 formed by the first portion 11 and the second portion 12 may be in various shapes, such as a cylinder and a cuboid.

In the battery 100, a plurality of battery cells 20 may be provided. The plurality of battery cells 20 may be in series connection, in parallel connection, or in parallel-series connection. The parallel-series connection means that some of the plurality of battery cells 20 are connected in series and some are connected in parallel. The plurality of battery cells 20 may be directly connected to each other in series or in parallel or in series-parallel, and then a unit composed of the plurality of battery cells 20 is received in the case 10. Of course, the battery 100 may also be a unit received in the case 10 that is formed by firstly connecting a plurality of battery cells 20 in series or in parallel or in series-parallel to form a plurality of battery modules, and then connecting the plurality of battery modules in series or in parallel or in series-parallel. The battery 100 may further comprise other structures. For example, the battery 100 may further comprise a bus component for achieving electrical connections between the plurality of battery cells 20.

Each battery cell 20 may be a secondary battery cell or a primary battery cell, and may also be a lithium-sulfur battery cell, a sodium-ion battery cell, or a magnesium-ion battery cell, but is not limited thereto. The battery cell 20 may be cylindrical, flat, cuboid or in another shape.

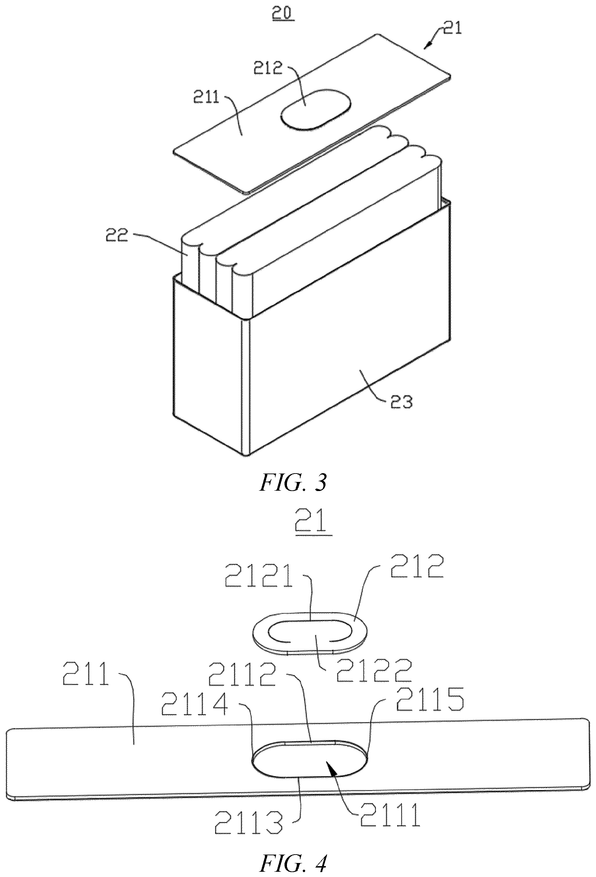

Referring to FIG. 3, FIG. 3 is a schematic exploded view of a structure of the battery cell 20 according to some embodiments of the present application. The battery cell 20 refers to the smallest unit of the battery 100. As shown in FIG. 3, the battery cell 20 comprises an end cap assembly 21, an electrode assembly 22 and a housing 23.

The end cap assembly 21 comprises an end cap 211 and a pressure relief mechanism 212. The end cap 211 refers to a component that covers an opening of the housing 23 to isolate the internal environment of the battery cell 20 from the external environment. Without limitation, the end cap 211 may be shaped to adapt to the shape of the housing 23 so as to cooperate with the housing 23. Optionally, the end cap 211 may be made of a material (for example, an aluminum alloy) with a certain hardness and strength. In this way, the end cap 211 is less prone to deformation when subjected to compression and collision, so that the battery cell 20 may have a higher structural strength and the safety performance can also be improved. The end cap 211 may also be made of various materials, such as copper, iron, aluminum, stainless steel, an aluminum alloy, plastic, etc., which will not be specially limited in the embodiments of the present application. The end cap assembly 21 may further comprise electrode terminals (not shown). The electrode terminals are arranged at the end cap 211. The electrode terminals may be used for electrical connection to the electrode assembly 22 for outputting or inputting electric energy of the battery cell 20. The pressure relief mechanism 212 is arranged at the end cap 211. The pressure relief mechanism 212 is configured to be opened when the internal pressure or temperature of the battery cell 20 reaches a detonation pressure to relieve the internal pressure of the battery cell 20.

The housing 23 is an assembly that is configured to cooperate with the end cap 211 so as to create the internal environment of the battery cell 20. The created internal environment may be used for receiving the electrode assembly 22, an electrolyte, and other components. The housing 23 and the end cap 211 may be separate components, the housing 23 may be provided with an opening, and the internal environment of the battery cell 20 is formed by making the end cap 211 cover the opening at the opening. Without limitation, the end cap 211 and the housing 23 may also be integrated with each other. Specifically, the end cap 211 and the housing 23 may form a common connection face before other components are inserted into the housing. When the interior of the housing 23 needs to be packaged, the end cap 211 then covers the housing 23. The housing 23 may have various shapes and various sizes, for example, in the shape of a cuboid, a cylinder, a hexagonal prism, etc. Specifically, the shape of the housing 23 may be determined depending on the specific shape and size of the electrode assembly 22. The housing 23 may be made of various materials, such as copper, iron, aluminum, stainless steel, an aluminum alloy, and plastic, which will not be specially limited in the embodiments of the present application.

The electrode assembly 22 is a component in the battery cell 20 where an electrochemical reaction occurs. The housing 23 may comprise one or more electrode assemblies 22 therein. The electrode assembly 22 is mainly formed by winding or stacking a positive electrode plate and a negative electrode plate, and a separator is generally arranged between the positive electrode plate and the negative electrode plate. The portions of the positive electrode plate and the negative electrode plate that have an active material form a body portion of the electrode assembly 22, and the portions of the positive electrode plate and the negative electrode plate that have no active material each form a tab. A positive electrode tab and a negative electrode tab may be both located at one end of the body portion or respectively at two ends of the body portion. During the charging and discharging of the battery 100, a positive active material and a negative active material react with the electrolyte, and the tabs are connected to the electrode terminals to form a current loop.

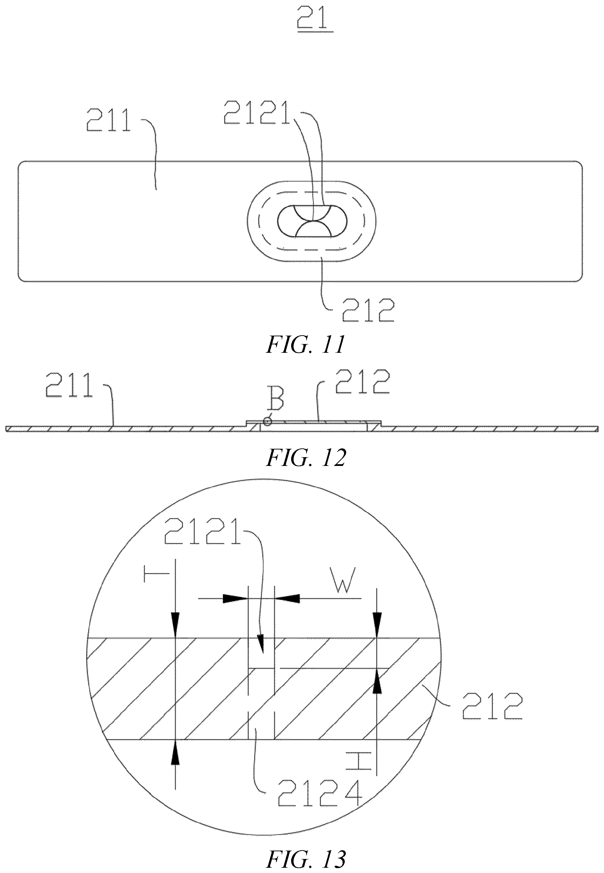

Referring to FIG. 4, FIG. 4 is an exploded view of an end cap assembly 21 according to some embodiments of the present application. The embodiments of the present application provide an end cap assembly 21 for a battery cell 20. The end cap assembly 21 comprises an end cap 211 and a pressure relief mechanism 212. The end cap 211 is provided with a pressure relief hole 2111, and the pressure relief mechanism 212 covers the pressure relief hole 2111. The pressure relief mechanism 212 is made of a polymer material. The pressure relief mechanism 212 is provided with a weakened portion 2124 (shown in FIGS. 13, 14 and 15). The weakened portion 2124 is configured to crack when pressure is relieved from the battery cell 20.

The pressure relief hole 2111 is a through hole that penetrates two surfaces of the end cap 211 in the thickness direction. The pressure relief mechanism 212 covers the pressure relief hole 2111 to isolate the inside of the battery cell 20 from the outside when the battery cell 20 is in normal use, to prevent external impurities from entering the battery cell 20 or an electrolyte in the battery cell 20 from leaking. The shape of the pressure relief hole 2111 is not limited. For example, the pressure relief hole 2111 may be a circular hole, a square hole, an elliptical hole, etc. Polymer materials, also known as macromolecular materials, are materials composed of polymer compounds as a matrix and other additives (auxiliaries). Polymer materials are classified into natural polymer materials and synthetic polymer materials according to their sources. Natural polymers are polymer substances that exist in animals, plants and living organisms, and may be classified into natural fibers, natural resins, natural rubber, animal glue, etc. Synthetic polymer materials mainly refer to three major synthetic materials, namely, plastics, synthetic rubber and synthetic fibers, and furthermore include adhesives, coatings and various functional polymer materials. Synthetic polymer materials have properties that natural polymer materials do not have or that are superior to those of the natural polymer materials - smaller density, higher mechanics, wear resistance, corrosion resistance, electrical insulation, etc.

The weakened portion 2124 (shown in FIGS. 13, 14 and 15) is a portion with a lower strength on the pressure relief mechanism 212. When the internal pressure of the battery cell 20 reaches the detonation pressure, the weakened portion 2124 is opened under the pressure to relieve the pressure from the inside of the battery cell 20, to reduce the risk of explosion or fire of the battery cell 20. It should be noted that the dotted lines in FIGS. 13, 14 and 15 are to mark the range of the weakened portion 2124 and do not represent the actual structure.

By "when pressure is relieved from the battery cell 20" refers to when the pressure inside the battery cell 20 reaches the detonation pressure. Since the pressure relief mechanism 212 is made of a polymer material, and the polymer material has breathable and waterproof properties, when the battery cell 20 is in normal use, the gas entering and exiting the battery cell 20 that is generated due to such properties cannot be called "when pressure is relieved".

Since the polymer material has breathable and waterproof properties and the pressure relief mechanism 212 is made of a polymer material, not only can gas be steadily discharged from the battery cell 20 when pressure is relieved from the battery cell 20, but external moisture can also be blocked from penetrating into the battery cell 20 when the battery cell 20 is in normal use, to block the flow of water vapor and the electrolyte to the inside and outside of the battery cell 20 through the pressure relief mechanism 212, reducing the risk of short circuit of the battery cell 20. In addition, by providing the pressure relief mechanism 212 with a weakened portion 2124, the weakened portion 2124 cracks when pressure is relieved from the battery cell 20, forming an opening for the smooth passage of the gas. The pressure relief mechanism 212 is less prone to problems such as deformation, cracking and local opening that lead to non-smooth pressure relief, facilitating the improvement of the safety of the battery cell 20.

Referring to FIG. 4, in some embodiments, the pressure relief mechanism 212 may be bonded to the end cap 211. In order to facilitate the bonding between the pressure relief mechanism 212 and the end cap 211, a projection may be provided on an outer periphery of the pressure relief hole 2111, and the pressure relief mechanism 212 is bonded to the projection.

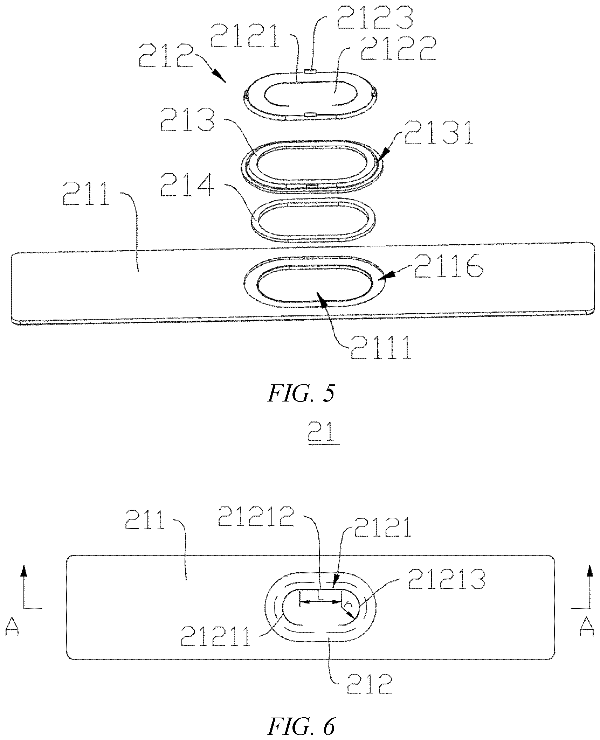

Referring to FIG. 5, FIG. 5 is an exploded view of an end cap assembly 21 according to some other embodiments of the present application. In some embodiments, the end cap assembly 21 comprises a connecting member 213. The connecting member 213 is connected to the end cap 211, and the pressure relief mechanism 212 is arranged at the connecting member 213. Optionally, the connecting member 213 is welded to the end cap 211. The connecting member 213 is provided with a snap groove 2131, and an edge of the pressure relief mechanism 212 is provided with a protrusion 2123. The protrusion 2123 is snap-fitted with the snap groove 2131.

In some embodiments, the connecting member 213 is of an annular structure, having a through hole in the middle that can allow the gas inside the battery cell 20 to flow to the pressure relief mechanism 212.

In some embodiments, a groove 2116 is provided on the end cap 211, and the groove 2116 is configured to receive at least a portion of the connecting member 213 to reduce the height of the pressure relief mechanism 212 protruding from the end cap 211.

In some embodiments, the end cap assembly 21 comprises a sealing member 214. The sealing member 214 is arranged between the connecting member 213 and the end cap 211, to seal the connecting member 213 from the end cap 211. The connecting member 213 can press the sealing member 214 against the end cap 211, and the sealing member 214 can prevent external water vapor from entering the inside of the battery cell 20 from between the connecting member 213 and the end cap 211.

In some embodiments, the sealing member 214 is a sealing ring, having a through hole in the middle that can allow the gas inside the battery cell 20 to flow to the pressure relief mechanism 212.

In some embodiments, the weakened portion 2124 is formed by providing an indented groove 2121 on the pressure relief mechanism 212.

The indented groove 2121 may be a groove body recessed from a surface of the pressure relief mechanism 212 in the thickness direction of the end cap 211. The indented groove 2121 may be provided on the surface of the pressure relief mechanism 212 facing the end cap 211, or may be provided on the surface of the pressure relief mechanism 212 facing away from the end cap 211. Taking the pressure relief mechanism 212 of a rectangular flat plate structure as an example, the pressure relief mechanism 212 has a first surface and a second surface opposite to each other in the thickness direction of the end cap 211. The first surface faces the end cap 211, and the second surface faces away from the end cap 211. The indented groove 2121 may be provided on the first surface of the pressure relief mechanism 212, or may be provided on the second surface of the pressure relief mechanism 212.

Providing the indented groove 2121 on the pressure relief mechanism 212 to form the weakened portion 2124 is simple and convenient, so that the machining is easy, and the production cost is low.

Referring to FIG. 5, in some embodiments, the pressure relief mechanism 212 is provided with a pressure relief portion 2122, and the indented groove 2121 extends along the edge of the pressure relief portion 2122. The pressure relief portion 2122 is configured to be opened with the indented groove 2121 as a boundary when pressure is relieved from the battery cell 20.

The pressure relief portion 2122 can be regarded as the portion delimited by the inner surface of the indented groove 2121. Taking an example in which the inner surface of the indented groove 2121 is rectangular, the pressure relief portion 2122 is a rectangular portion of the pressure relief mechanism 212 delimited by the inner surface of the indented groove 2121. The indented groove 2121 may also be a linear groove extending along a bent trajectory. For example, if the bent trajectory is a U-shaped trajectory, the pressure relief portion 2122 is a U-shaped portion of the pressure relief mechanism 212 delimited by the bent trajectory. For another example, if the bent trajectory is a rectangular trajectory, the pressure relief portion 2122 is a rectangular portion of the pressure relief mechanism 212 delimited by the bent trajectory. If the indented groove 2121 is a linear groove extending along the bent trajectory, when the internal pressure of the battery cell 20 reaches the detonation pressure, the pressure relief portion 2122 may be opened with the indented groove 2121 as a boundary, so as to relieve the internal pressure of the battery cell 20.

Since an indentation is provided along the edge of the pressure relief portion 2122, when pressure is relieved from the battery cell 20, the pressure relief portion 2122 will be opened along the edge to provide a larger opening for the passage of the gas.

In some other embodiments, the pressure relief mechanism 212 is provided with a pressure relief portion 2122. The pressure relief portion 2122 is the remaining portion of the pressure relief mechanism 212 after the indented groove 2121 is provided. The pressure relief mechanism 212 is configured to be opened from the pressure relief portion 2122 when pressure is relieved from the battery cell 20.

Referring to FIGS. 4 and 6, FIG. 6 is a schematic top view of an end cap assembly 21 (with an indented groove 2121 being C-shaped) according to some embodiments of the present application. In some embodiments, the indented groove 2121 is a non-closed structure extending along a non-closed trajectory.

It should be noted that the dotted line in FIG. 6 represents the position of a pressure relief hole 2111.

There is a distance between two ends of the non-closed trajectory. The non-closed trajectory may be a U-shaped trajectory, a C-shaped trajectory, an arc-shaped trajectory, a parabolic trajectory, etc. Since the indented groove 2121 extends along the non-closed trajectory with a distance between the two ends, the indented groove 2121 may also be a U-shaped groove, a C-shaped groove, an arc-shaped groove, a parabolic groove, etc.

There is a distance between two ends of the non-closed trajectory, that is, there is a distance between two ends of the indented groove 2121 extending along the non-closed trajectory. In this way, when pressure is relieved from the battery cell 20, the part of the indented groove 2121 between the two ends can serve as a rotation axis, around which the pressure relief portion 2122 is flipped and opened, facilitating the improvement of the opening efficiency of the pressure relief portion 2122, so that the pressure relief portion 2122 is less prone to problems such as deformation, cracking and local opening that lead to non-smooth pressure relief, facilitating the improvement of the safety of the battery cell 20.

In some embodiments, the indented groove 2121 comprises a first section 21211, a second section 21212, and a third section 21213 connected to one another in sequence. The first section 21211 is arranged opposite the third section 21213.

The first section 21211 and the third section 21213 are two groove sections of the indented groove 2121 that are arranged opposite each other, and the second section 21212 is the groove section of the indented groove 2121 that connects the first section 21211 to the third section 21213. There is a spacing between the end of the first section 21211 away from the second section 21212 and the end of the third section 21213 away from the second section 21212, so as to form a non-closed structure. Since the first section 21211 is arranged opposite the third section 21213, the entire indented groove 2121 has a non-linear structure. In other words, the extension directions of at least two of the first section 21211, the second section 21212 and the third section 21213 are not on the same straight line.

When pressure is relieved from the battery cell 20, the pressure relief portion 2122 is opened with the first section 21211, the second section 21212 and the third section 21213 as boundaries, and a connection line between the end of the first section 21211 away from the second section 21212 and the end of the third section 21213 away from the second section 21212 serves as a rotation axis for the pressure relief portion 2122 to rotate, facilitating the opening of the pressure relief portion 2122.

Referring to FIGS. 4 and 6, in some embodiments, the second section 21212 is in the shape of a straight line, and the first section 21211 and the third section 21213 are symmetrical with respect to a perpendicular bisector of the second section 21212.

The second section 21212 extends along a linear trajectory. The perpendicular bisector of the second section 21212 refers to a straight line that passes through the midpoint of the second section 21212 and is perpendicular to the second section 21212. The perpendicular bisector of the second section 21212 may also be called a perpendicular bisecting line of the second section 21212. The first section 21211 and the third section 21213 are arranged axially symmetrically with respect to the perpendicular bisector of the second section 21212.

The first section 21211 and the third section 21213 are arranged symmetrically with respect to the perpendicular bisector of the second section 21212, so that the pressure relief portion 2122 is stressed uniformly when being opened, facilitating the improvement of the opening efficiency of the pressure relief portion 2122.

Referring to FIGS. 4 and 6, in some embodiments, the first section 21211 and the third section 21213 are arc-shaped.

The first section 21211 and the third section 21213 respectively extend along an arc-shaped trajectory, and the first section 21211 and the third section 21213 are bent in directions away from each other, so that the centers of circles of the first section 21211 and the third section 21213 are both located inside the pressure relief portion 2122.

In particular, the first section 21211 and the third section 21213 may be semicircular. In this way, the indented groove 2121 formed by connecting the first section 21211, the second section 21212 and the third section 21213 is C-shaped.

Configuring the first section 21211 and the third section 21213 to be arc-shaped facilitates the encircling of a larger range, so that the area of the pressure relief portion 2122 is larger. In this way, a larger opening for the passage of gas is formed after the pressure relief portion 2122 is opened, facilitating the smooth pressure relief.

Referring to FIGS. 4 and 6, in some embodiments, a hole wall surface of the pressure relief hole 2111 comprises a first flat surface 2112, a second flat surface 2113, a first arc-shaped surface 2114 and a second arc-shaped surface 2115. The first flat surface 2112, the first arc-shaped surface 2114, the second flat surface 2113 and the second arc-shaped surface 2115 are connected end-to-end in sequence. The first arc-shaped surface 2114 is arranged coaxially with the first section 21211, and the second arc-shaped surface 2115 is arranged coaxially with the third section 21213.

The first flat surface 2112 and the second flat surface 2113 are both flat surfaces. The first arc-shaped surface 2114 and the second arc-shaped surface 2115 are both curved surfaces, and the first arc-shaped surface 2114 and the second arc-shaped surface 2115 each extend along an arc-shaped trajectory. The first flat surface 2112, the first arc-shaped surface 2114, the second flat surface 2113 and the second arc-shaped surface 2115 jointly define the pressure relief hole 2111.

By "the first arc-shaped surface 2114 is arranged coaxially with the first section 21211", it is meant that the axis of the first arc-shaped surface 2114 passes through the center of circle of the first section 21211. By "the second arc-shaped surface 2115 is arranged coaxially with the third section 21213", it is meant that the axis of the second arc-shaped surface 2115 passes through the center of circle of the third section 21213.

In this embodiment, the pressure relief hole 2111 is an O-shaped structure enclosed by the first flat surface 2112, the second flat surface 2113, the first arc-shaped surface 2114 and the second arc-shaped surface 2115. Correspondingly, the pressure relief portion 2122 is also O-shaped. In this way, the shape of the pressure relief hole 2111 is the same as that of the pressure relief portion 2122, facilitating the cracking from the position of the indented groove 2121 when pressure is relieved from the battery cell 20.

The shape of the pressure relief mechanism 212 matches that of the pressure relief hole 2111, so as to reduce the material consumption of the pressure relief mechanism 212 while providing a good covering effect on the pressure relief hole 2111.

In some other embodiments, the pressure relief hole 2111 may also be rectangular, elliptical, etc. In this way, the shape of the pressure relief hole 2111 is similar to that of the pressure relief portion 2122, also facilitating the cracking from the position of the indented groove 2121 when pressure is relieved from the battery cell 20.

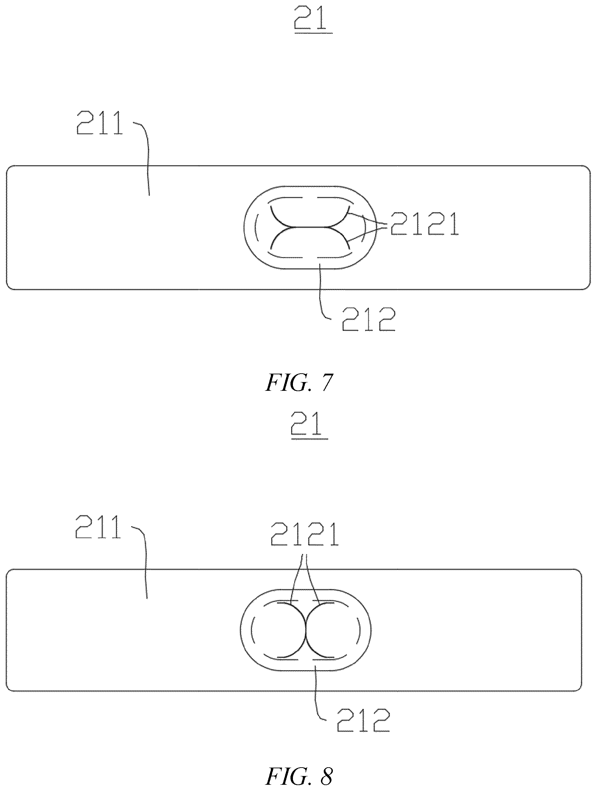

Referring to FIGS. 7 and 8, FIG. 7 is a schematic top view of an end cap assembly 21 (with an indented groove 2121 being double C-shaped, and an opening of each C shape being directed in a width direction of an end cap 211) according to some embodiments of the present application. FIG. 8 is a schematic top view of an end cap assembly 21 (with an indented groove 2121 being double C-shaped, and an opening of each C shape being directed in a length direction of an end cap 211) according to some embodiments of the present application. It should be noted that the dotted lines in FIGS. 7 and 8 each represent the position of a pressure relief hole 2111. In some embodiments, the pressure relief mechanism 212 is provided with two indented grooves 2121. The two indented grooves 2121 are arranged back-to-back.

The indented grooves 2121 are each a non-closed structure extending along a non-closed trajectory with a distance between two ends. The indented grooves 2121 each form a pattern with an open end. The back-to-back arrangement of the two indented grooves 2121 means that the open ends of the two indented grooves 2121 are directed in opposite directions.

Referring to FIG. 7, in some other embodiments, the two indented grooves 2121 are both C-shaped grooves. The open ends of the two indented grooves 2121 are directed in the width direction of the end cap 211. Referring to FIG. 8, in still some other embodiments, the two indented grooves 2121 are both C-shaped grooves. The open ends of the two indented grooves 2121 are directed in the length direction of the end cap 211.

By providing two indented grooves 2121 on the pressure relief mechanism 212, two pressure relief portions 2122 are formed correspondingly. When pressure is relieved from the battery cell 20, the two pressure relief portions 2122 respectively crack from the positions where the two indented grooves 2121 are located, forming two openings for pressure relief. The pressure relief mechanism 212 is less prone to problems such as deformation, cracking and local opening that lead to non-smooth pressure relief, providing a good pressure relief effect, and facilitating the improvement of the safety of the battery cell 20.

Referring to FIGS. 7 and 8, in some embodiments, the two indented grooves 2121 partially overlap each other.

Each indented groove 2121 may comprise a first section 21211, a second section 21212, and a third section 21213 connected to one another in sequence. The first section 21211 is arranged opposite the third section 21213. The first section 21211 and the third section 21213 are arc-shaped, and the second section 21212 is in the shape of a straight line. The first section 21211 and the third section 21213 are symmetrical with respect to a perpendicular bisector of the second section 21212. The second sections 21212 of the two indented grooves 2121 may be arranged to overlap each other.

It should be noted that the partial overlapping of the two indented grooves 2121 here may mean that the two indented grooves 2121 are arranged in an intersecting manner, or the two indented grooves 2121 are arranged tangent to each other.

When the overlapping portion of the two indented grooves 2121 cracks, the two openings can be formed at the same time, facilitating the improvement of the opening efficiency of the pressure relief mechanism 212.

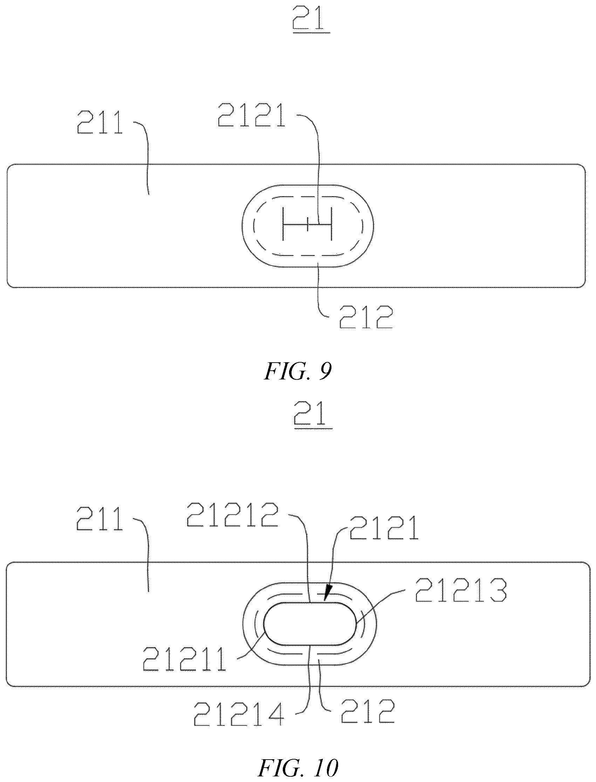

Referring to FIG. 9, FIG. 9 is a schematic top view of an end cap assembly 21 (with an indented groove 2121 being in the shape of the Chinese character " 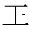 ") according to some embodiments of the present application. In some embodiments, the pressure relief mechanism 212 is provided with a plurality of indented grooves 2121, and at least two of the plurality of indented grooves 2121 are arranged in an intersecting manner.

Referring to FIG. 9, the pressure relief mechanism 212 in FIG. 9 comprises four indented grooves 2121, and the four indented grooves 2121 are arranged in an intersecting manner to form a structure in the shape of the Chinese character " 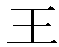 ".

In some embodiments, the area of the pressure relief portion 2122 is S1, and the area of the pressure relief hole 2111 is S2, satisfying: 0.3 < S1/S2 ≤ 1.

S1/S2 represents the ratio of the area of the pressure relief portion 2122 to the area of the pressure relief hole 2111. The ratio of the area of the pressure relief portion 2122 to the area of the pressure relief hole 2111 may be: S1/S2 = 0.35, 0.4, 0.5, 0.6, 0.7, 0.8, 0.9, 1, etc.

The ratio of the area of the pressure relief portion 2122 to the area of the pressure relief hole 2111 is greater than 0.3 and less than or equal to 1, to ensure that the pressure relief portion 2122 has a larger area, so that after the pressure relief portion 2122 is opened, a larger opening is formed for the passage of the gas, thereby allowing the pressure to be relieved smoothly from the battery cell 20.

In some embodiments, the indented groove 2121 comprises a first section 21211, a second section 21212, and a third section 21213 connected to one another in sequence. The first section 21211 is arranged opposite the third section 21213. The first section 21211 and the third section 21213 are in the shape of a semicircle, and the second section 21212 is in the shape of a straight line. The first section 21211 and the third section 21213 are symmetrical with respect to a perpendicular bisector of the second section 21212. The length of the second section 21212 is L, and the radii of the first section 21211 and the third section 21213 are both r, satisfying: S1 = πr2 + 2rL.

Configuring the first section 21211 and the third section 21213 in the shape of a semicircle facilitates the encircling of a larger range, so that the area of the pressure relief portion 2122 is larger. In this way, a larger opening for the passage of gas is formed after the pressure relief portion 2122 is opened, facilitating the smooth pressure relief. The first section 21211 and the third section 21213 are arranged symmetrically with respect to the perpendicular bisector of the second section 21212, so that the pressure relief portion 2122 is stressed uniformly when being opened, facilitating the improvement of the opening efficiency of the pressure relief portion 2122. In this case, the pressure relief portion 2122 comprises a region jointly defined by the first section 21211, the second section 21212, the third section 21213, and a connection line between the end of the first section 21211 away from the second section 21212 and the end of the third section 21213 away from the second section 21212. The area of the pressure relief portion 2122 is: S1 = πr² + 2rL.

Referring to FIG. 10, FIG. 10 is a schematic top view of an end cap assembly 21 (with an indented groove 2121 being O-shaped) according to some embodiments of the present application. In some embodiments, the indented groove 2121 is a closed structure extending along a closed trajectory.

By "closed trajectory" means a trajectory with two ends connected together. The closed trajectory may be a circular trajectory, an elliptical trajectory, a polygonal trajectory, etc. The indented groove 2121 extends along the closed trajectory. Therefore, the indented groove 2121 may also be a circular groove, an elliptical groove, a polygonal groove, etc.

The indented groove 2121 is configured as a closed structure extending along a closed trajectory, so that when the pressure relief mechanism 212 cracks along the indented groove 2121 during the pressure relief, to form an opening for the passage of the gas.

In some embodiments, the indented groove 2121 comprises a first section 21211, a second section 21212, a third section 21213 and a fourth section 21214 connected end-to-end in sequence. The first section 21211 is arranged opposite the third section 21213, and the second section 21212 is arranged opposite the fourth section 21214. The first section 21211 and the third section 21213 are arc-shaped, and the second section 21212 and the fourth section 21214 are in the shape of a straight line.

The first section 21211 and the third section 21213 may be bent in the same direction, or may be bent in opposite directions. The first section 21211 and the third section 21213 may be bent in directions approaching each other, so that the center of circle of the first section 21211 and the center of circle of the third section 21213 are located outside the pressure relief portion 2122. The first section 21211 and the third section 21213 may alternatively be bent in directions away from each other, and the center of circle of the first section 21211 and the center of circle of the third section 21213 are located inside the pressure relief portion 2122.

Illustratively, in FIG. 10, the first section 21211 and the third section 21213 are bent in directions away from each other, the second section 21212 and the fourth section 21214 are linear grooves extending in the length direction of the end cap 211, the second section 21212 and the fourth section 21214 are both tangent to the first section 21211, and the second section 21212 and the fourth section 21214 are both tangent to the third section 21213, so that an O-shaped indented groove 2121 is formed by the first section 21211, the second section 21212, and the third section 21213 and the fourth section 21214.

The first section 21211 and the third section 21213 are arc-shaped grooves, and the pressure relief mechanism 212 has a weakened part formed in each of the middle of the first section 21211 and the middle of the third section 21213, and the weakened parts are the parts of the pressure relief portion 2122 that are opened earliest, so that the pressure relief portion 2122 can be opened in a timely manner when the inside of the battery cell 20 reaches the detonation pressure. The second section 21212 and the fourth section 21214 are linear grooves extending in a length direction of the end cap 211, so that the second section 21212 and the fourth section 21214 are arranged in parallel. After cracking along the first section 21211 and the third section 21213, the pressure relief portion 2122 can be more easily opened along the second section 21212 and the fourth section 21214, increasing the opening rate of the pressure relief portion 2122 and achieving rapid pressure relief.

Referring to FIG. 11, FIG. 11 is a schematic top view of an end cap assembly 21 (with an indented groove 2121 being in the shape of a combination of O and C) according to some embodiments of the present application. In some embodiments, the pressure relief mechanism 212 comprises a plurality of indented grooves 2121. Some of the indented grooves 2121 are non-closed structures each extending along a non-closed trajectory. The other indented grooves 2121 are closed structures each extending along a closed trajectory. The plurality of indented grooves 2121 are arranged in an intersecting manner.

In FIG. 11, the pressure relief mechanism 212 comprises three indented grooves 2121, of which two indented grooves 2121 are both C-shaped grooves. The open ends of the two indented grooves 2121 are directed in the width direction of the end cap 211. The other indented groove 2121 is an O-shaped groove. The two C-shaped indented grooves 2121 are located inside the O-shaped indented groove 2121, and the open ends of the two C-shaped indented grooves 2121 are both closed by the O-shaped indented groove 2121.

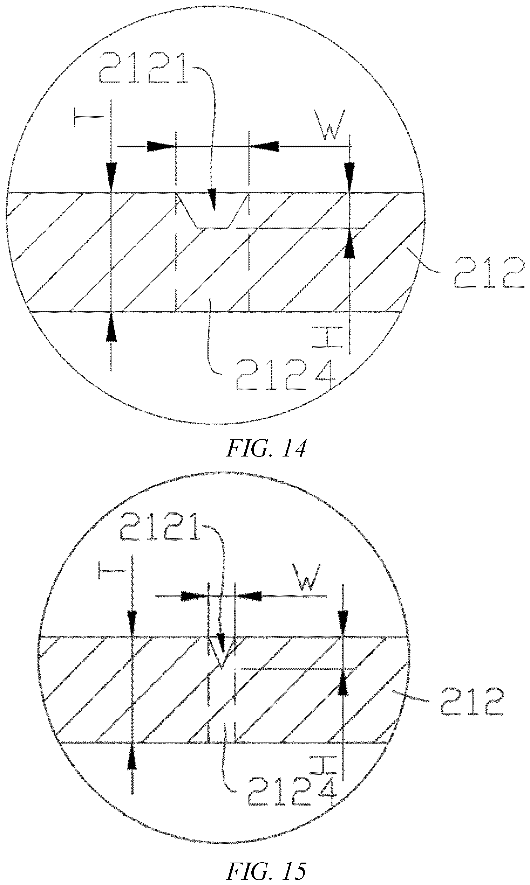

Referring to FIGS. 12, 13, 14, and 15, FIG. 12 is a cross-sectional view taken along line A-A of FIG. 5. FIG. 13 is an enlarged view of part B in FIG. 9 (with the indented groove 2121 having a rectangular cross-section). FIG. 14 is an enlarged view of part B in FIG. 9 (with the indented groove 2121 having a trapezoidal cross-section). FIG. 15 is an enlarged view of part B in FIG. 9 (with the indented groove 2121 having a triangular cross-section). In some embodiments, the width of the indented groove 2121 is W, and the thickness of the pressure relief mechanism 212 is T, satisfying: 0 < W/T ≤ 1.

The cross-sectional shape of the indented groove 2121 is not limited. For example, referring to FIG. 13, in the embodiment shown in FIG. 13, the indented groove 2121 has a rectangular cross-sectional shape. Referring to FIG. 14, in the embodiment shown in FIG. 14, the indented groove 2121 has a trapezoidal cross-sectional shape. Referring to FIG. 15, in the embodiment shown in FIG. 15, the indented groove 2121 has a triangular cross-sectional shape.

The width of the indented groove 2121 refers to the width of a groove opening of the indented groove 2121 on the cross-section of the indented groove 2121.

The width of the indented groove 2121 at different positions may be different or the same. However, the ratio of the width of the indented groove 2121 at any position to the thickness of the pressure relief mechanism 212 should be greater than 0 and less than or equal to 1. The ratio of the width of the indented groove 2121 to the thickness of the pressure relief mechanism 212 may be: W/T = 1, 0.9, 0.8, 0.7, 0.6, 0.5, 0.4, 0.3, 0.2, 0.1, etc.

The ratio of the width of the indented groove 2121 to the thickness of the pressure relief mechanism 212 is greater than 0 and less than or equal to 1. The width of the indented groove 2121 should not be too wide, otherwise when pressure is relieved from the battery cell 20, the position where the indented groove 2121 is located will not be susceptible to shear force, but will be prone to tensile strain, making it difficult for the pressure relief mechanism 212 to crack from the position of the indented groove 2121. Where W/T > 1, compared with the case of 0 < W/T ≤ 1, it is more difficult for the pressure relief mechanism 212 to crack from the position of the indented groove 2121.

In some embodiments, W and T further satisfy: 0.004 mm ≤ W ≤ 0.018 mm; and/or 0.01 mm ≤ T ≤ 10 mm.

The width of the indented groove 2121 is in the range of 0.004-0.018 mm, and the pressure relief mechanism 212 is likely to crack along the indented groove 2121 when pressure is relieved from the battery cell 20. The thickness of the pressure relief mechanism 212 is within 0.01-10 mm, so that not only can gas be steadily discharged from the battery cell 20 when pressure is relieved from the battery cell 20, but external moisture can also be blocked from penetrating into the battery cell 20 when the battery cell 20 is in normal use, reducing the risk of short circuit of the battery cell 20.

In some embodiments, the depth of the indented groove 2121 is H in mm. The detonation pressure of the battery cell 20 is P in MPa. The thickness of the pressure relief mechanism 212 is T in mm. They satisfy: H = K(-0.181P + T - 0.246), K ∈ [0.1, 5].

If the indented groove 2121 is recessed toward the end cap 211 from the surface of the pressure relief mechanism 212 away from the end cap 211 in the thickness direction of the end cap 211, the depth of the indented groove 2121 is the maximum distance in the thickness direction of the end cap 211 between the bottom of the indented groove 2121 and the surface of the pressure relief mechanism 212 away from the end cap 211.

The detonation pressure refers to the gas pressure value that enables the pressure relief mechanism 212 to be opened. When the pressure inside the battery cell 20 reaches the detonation pressure, the pressure relief mechanism 212 is opened to relieve pressure.

In the thickness direction of the end cap 211, the pressure relief mechanism 212 has a first surface and a second surface opposite to each other. The thickness of the pressure relief mechanism 212 refers to the distance between the first surface and the second surface in the thickness direction of the end cap 211.

K is coefficient. 0.1 ≤ K ≤ 5.

If the detonation pressure of the battery cell 20 and the thickness of the pressure relief mechanism 212 are known, the depth range that the indented groove 2121 should be indented can be obtained according to the equation.

In some embodiments, the polymer material comprises at least one of fluorinated ethylene propylene copolymer and polychlorotrifluoroethylene.

Fluorinated ethylene propylene copolymer and polychlorotrifluoroethylene have a good balance of breathability and waterproofness, and the pressure relief mechanism 212 is made of at least one of fluorinated ethylene propylene copolymer and polychlorotrifluoroethylene, so that not only can gas be steadily discharged from the battery cell 20 when pressure is relieved from the battery cell 20, but external moisture can also be blocked from penetrating into the battery cell 20 when the battery cell 20 is in normal use, reducing the risk of short circuit of the battery cell 20.

The embodiments of the present application further provide a battery cell 20. The battery cell 20 comprises an electrode assembly 22, a housing 23 and an end cap assembly 21 as described above. The housing 23 has a receiving space which has an opening at at least one end, the receiving space is configured to receive the electrode assembly 22, and the end cap 211 closes the opening.

The embodiments of the present application further provide a battery 100. The battery 100 comprises a case 10 and a battery cell 20 as described above. The battery cell 20 is received in the case 10.

The embodiments of the present application further provide a power consuming device, comprising a battery 100 as described above. The battery 100 is configured to supply electric energy to the power consuming device.

According to some embodiments of the present application, reference is made to FIGS. 4-15.

The embodiments of the present application provides an end cap assembly 21 for a battery cell 20. The end cap assembly 21 comprises an end cap 211 and a pressure relief mechanism 212. The end cap 211 is provided with a pressure relief hole 2111, and the pressure relief mechanism 212 covers the pressure relief hole 2111. The pressure relief mechanism 212 is made of a polymer material. The pressure relief mechanism 212 is provided with a weakened portion 2124. The weakened portion 2124 is configured to crack when pressure is relieved from the battery cell 20. The weakened portion 2124 is formed by providing an indented groove 2121 on the pressure relief mechanism 212. The pressure relief mechanism 212 is provided with a pressure relief portion 2122, the indented groove 2121 extends along an edge of the pressure relief portion 2122, and the pressure relief portion 2122 is configured to be opened with the indented groove 2121 as a boundary when pressure is relieved from the battery cell 20. The indented groove 2121 is a non-closed structure extending along a non-closed trajectory with a distance between two ends.

Since the polymer material has breathable and waterproof properties and the pressure relief mechanism 212 is made of a polymer material, not only can gas be steadily discharged from the battery cell 20 when pressure is relieved from the battery cell 20, but external moisture can also be blocked from penetrating into the battery cell 20 when the battery cell 20 is in normal use, to block the flow of water vapor and the electrolyte to the inside and outside of the battery cell 20 through the pressure relief mechanism 212, reducing the risk of short circuit of the battery cell 20. In addition, by providing the pressure relief mechanism 212 with an indented groove 2121 so as to form a weakened portion 2124 on the pressure relief mechanism 212, it is ensured that the pressure relief mechanism 212 can be torn from the position where the indented groove 2121 is located when pressure is relieved from the battery cell 20, forming an opening for the smooth passage of the gas. The pressure relief mechanism 212 is less prone to problems such as deformation, cracking and local opening that lead to non-smooth pressure relief, facilitating the improvement of the safety of the battery cell 20. Since an indentation is provided along the edge of the pressure relief portion 2122, when pressure is relieved from the battery cell 20, the pressure relief portion 2122 will be opened along the edge to provide a larger opening for the passage of the gas. There is a distance between two ends of the indented groove 2121. In this way, when pressure is relieved from the battery cell 20, the part of the indented groove 2121 between the two ends can serve as a rotation axis, around which the pressure relief portion 2122 is flipped and opened, facilitating the improvement of the opening efficiency of the pressure relief portion 2122, so that the pressure relief portion 2122 is less prone to problems such as deformation, cracking and local opening that lead to non-smooth pressure relief, facilitating the improvement of the safety of the battery cell 20.

The indented groove 2121 comprises a first section 21211, a second section 21212, and a third section 21213 connected to one another in sequence. The first section 21211 is arranged opposite the third section 21213. The first section 21211 and the third section 21213 are arc-shaped, and the second section 21212 is in the shape of a straight line. The first section 21211 and the third section 21213 are symmetrical with respect to a perpendicular bisector of the second section 21212. When pressure is relieved from the battery cell 20, the pressure relief portion 2122 is opened with the first section 21211, the second section 21212 and the third section 21213 as boundaries, and a connection line between the end of the first section 21211 away from the second section 21212 and the end of the third section 21213 away from the second section 21212 serves as a rotation axis for the pressure relief portion 2122 to rotate, facilitating the opening of the pressure relief portion 2122.

The area of the pressure relief portion 2122 is S1, and the area of the pressure relief hole 2111 is S2, satisfying: 0.3 < S1/S2 ≤ 1. The ratio of the area of the pressure relief portion 2122 to the area of the pressure relief hole 2111 is greater than 0.3 and less than or equal to 1, to ensure that the pressure relief portion 2122 has a larger area, so that after the pressure relief portion 2122 is opened, a larger opening is formed for the passage of the gas, thereby allowing the pressure to be relieved smoothly from the battery cell 20.

The width of the indented groove 2121 is W, and the thickness of the pressure relief mechanism 212 is T, satisfying: 0 < W/T ≤ 1. The ratio of the width of the indented groove 2121 to the thickness of the pressure relief mechanism 212 is greater than 0 and less than or equal to 1. The width of the indented groove 2121 should not be too wide, otherwise when pressure is relieved from the battery cell 20, the position where the indented groove 2121 is located will not be susceptible to shear force, but will be prone to tensile strain, making it difficult for the pressure relief mechanism 212 to crack from the position of the indented groove 2121. Where W/T > 1, compared with the case of 0 < W/T ≤ 1, it is more difficult for the pressure relief mechanism 212 to crack from the position of the indented groove 2121.

The depth of the indented groove 2121 is H in mm, the detonation pressure of the battery cell 20 is P in MPa, and the thickness of the pressure relief mechanism 212 is T in mm, satisfying: H = - 0.181P + T - 0.246. If the detonation pressure of the battery cell 20 and the thickness of the pressure relief mechanism 212 are known, the depth that the indented groove 2121 should be indented can be obtained according to the equation.

The foregoing descriptions are merely preferred embodiments of the present application, but are not intended to limit the present application. For those skilled in the art, the present application may have various modifications and variations. Any modifications, equivalent substitutions, improvements and the like made within the spirit and principle of the present application should fall within the scope of protection of the present application.

## Claims

1. An end cap assembly for a battery cell, comprising:
an end cap provided with a pressure relief hole; and
a pressure relief mechanism covering the pressure relief hole,
wherein the pressure relief mechanism is made of a polymer material, and the pressure relief mechanism is provided with a weakened portion configured to crack when pressure is relieved from the battery cell.

2. The end cap assembly of claim 1, wherein the weakened portion is formed by providing an indented groove on the pressure relief mechanism.

3. The end cap assembly of claim 2, wherein:
the pressure relief mechanism is provided with a pressure relief portion;
the indented groove extends along an edge of the pressure relief portion; and
the pressure relief portion is configured to be opened with the indented groove as a boundary when pressure is relieved from the battery cell.

4. The end cap assembly of claim 3, wherein the indented groove is a non-closed structure extending along a non-closed trajectory.

5. The end cap assembly of claim 4, wherein the indented groove comprises a first section, a second section and a third section connected to one another in sequence, the first section being arranged opposite the third section.

6. The end cap assembly of claim 5, wherein the second section is in the shape of a straight line, and the first section and the third section are symmetrical with respect to a perpendicular bisector of the second section.

7. The end cap assembly of claim 6, wherein the first section and the third section are arc-shaped.

8. The end cap assembly of claim 6 or 7, wherein a hole wall surface of the pressure relief hole comprises a first flat surface, a second flat surface, a first arc-shaped surface and a second arc-shaped surface, wherein:
the first flat surface, the first arc-shaped surface, the second flat surface and the second arc-shaped surface are connected end-to-end in sequence; and
the first arc-shaped surface is arranged coaxially with the first section, and the second arc-shaped surface is arranged coaxially with the third section.

9. The end cap assembly of claim 4, wherein the pressure relief mechanism is provided with two indented grooves, which are arranged back-to-back.

10. The end cap assembly of claim 9, wherein the two indented grooves partially overlap each other.

11. The end cap assembly of any one of claims 3-10, wherein an area of the pressure relief portion is S1, and an area of the pressure relief hole is S2, wherein 0.3 < S1/S2 ≤ 1.

12. The end cap assembly of claim 11, wherein the indented groove comprises a first section, a second section and a third section connected to one another in sequence, wherein:
the first section is arranged opposite the third section;
the first section and the third section are in a shape of a semicircle, and the second section is in the shape of a straight line;
the first section and the third section are symmetrical with respect to a perpendicular bisector of the second section; and
a length of the second section is L, and radii of the first section and the third section are both r, wherein S1 = πr² + 2rL.

13. The end cap assembly of claim 2 or 3, wherein the indented groove is a closed structure extending along a closed trajectory.

14. The end cap assembly of claim 13, wherein the indented groove comprises a first section, a second section, a third section and a fourth section connected end-to-end in sequence, wherein:
the first section is arranged opposite the third section, and the second section is arranged opposite the fourth section; and
the first section and the third section are arc-shaped, and the second section and the fourth section are in a shape of a straight line.

15. The end cap assembly of any one of claims 2-14, wherein a width of the indented groove is W, and a thickness of the pressure relief mechanism is T, wherein 0 < W/T ≤ 1.

16. The end cap assembly of claim 15, wherein 0.004 mm ≤ W ≤ 0.018 mm, and/or 0.01 mm ≤ T ≤ 10 mm.

17. The end cap assembly of any one of claims 2-16, wherein:
a depth of the indented groove is H in mm;
a detonation pressure of the battery cell is P in MPa; and
a thickness of the pressure relief mechanism is T in mm,
wherein H = K(-0.181P + T - 0.246), K ∈ [0.1, 5].

18. The end cap assembly of any one of claims 1-17, wherein the polymer material comprises at least one of fluorinated ethylene-propylene copolymer and polychlorotrifluoroethylene.

19. A battery cell, comprising:
an electrode assembly; and
a housing, having a receiving space which has an opening at at least one end thereof, the receiving space being configured to receive the electrode assembly; and
an end cap assembly of any one of claims 1-18, wherein the end cap covers the opening.

20. A battery, comprising:
a case; and
a battery cell of claim 19, wherein the battery cell is received in the case.

21. A power consuming device, comprising a battery of claim 20, the battery being configured to supply electric energy to the power consuming device.
